# EUROPÄISCHE PATENTSCHRIFT

(11) **EP 2 602 054 B1**
(45) Veröffentlichungstag und Bekanntmachung des Hinweises auf die Patenterteilung: **18.03.2015**
(21) Anmeldenummer: 12196391.2
(22) Anmeldetag: 10.12.2012
(51) Int. Cl.: B23Q 1/48, B23B 23/00

(54) **Werkzeugmaschine**
Machine tool
Machine-outil

(30) Priorität: 08.12.2011 DE 102011056198
(43) Veröffentlichungstag der Anmeldung: 12.06.2013
(73) Patentinhaber: Index-Werke GmbH & Co. KG Hahn & Tessky, 73730 Esslingen (DE)
(72) Erfinder: Baumann, Ulrich, 73252 Lenningen (DE); Stark, Ralf Thomas, 73110 Hattenhofen (DE)
(74) Vertreter: Hoeger, Stellrecht & Partner Patentanwälte

(56) Entgegenhaltungen:
- DE-A1- 1 932 431
- DE-A1- 3 529 481
- DE-A1- 3 530 479
- DE-A1- 3 817 161
- DE-A1-102006 026 185

## Beschreibung

Die Erfindung betrifft eine Werkzeugmaschine gemäß dem Oberbegriff des Anspruchs 1, wie aus der DE-A-102006026185 bekannt.

Bei diesen Werkzeugmaschinen besteht allerdings das Problem, dass die Bearbeitung großer und schwerer Werkstücke Probleme bereitet.

Der Erfindung liegt daher die Aufgabe zugrunde, eine Werkzeugmaschine der gattungsgemäßen Art derart zu verbessern, dass mit dieser die Bearbeitung großer und schwerer Werkstücke in vorteilhafter Weise möglich ist.

Diese Aufgabe wird mit einer Werkzeugmaschine gemäß Anpruch 1 gelöst.

Der Vorteil der erfindungsgemäßen Lösung ist darin zu sehen, dass damit in einfacher Weise die Möglichkeit besteht, einerseits ein schweres und großes Werkzeug durch die Werkstückabstützeinheit abzustützen, andererseits die Möglichkeit besteht, mit der Werkzeugaufnahme das Werkstück gegebenenfalls zu bearbeiten, beispielsweise insbesondere Innenbearbeitungen vorzunehmen.

Um eine möglichst hohe Flexibilität bei der Durchführung der Innenbearbeitungen zu haben, ist vorgesehen, dass die Funktionsträgerbasis in der Querrichtung mittels der Maschinensteuerung lagegeregelt steuerbar ist.

Besonders einfach lässt sich eine derartige lagegeregelte Steuerung der Funktionsträgerbasis in der Querrichtung durchführen, da die Maschinensteuerung die Funktionsträgerbasis in der Querrichtung entsprechend einer konventionellen X-Achse steuert.

Hinsichtlich der Dimensionierung der Werkzeugaufnahme in der Funktionsträgerbasis wurden bislang keine näheren Angaben gemacht.

Prinzipiell wäre es denkbar, jede Art von Werkzeugen in der Werkzeugaufnahme der Funktionsträgerbasis aufzunehmen.

Eine besonders günstige Lösung sieht vor, dass die Werkzeugaufnahme in der Funktionsträgerbasis eine Dimensionierung, insbesondere einen Durchmesser, aufweist, welche größer ist als ein die maximale Dimensionierung der Werkzeugaufnahmen am Revolverkopf. Insbesondere ist der Durchmesser der Werkzeugaufnahme an der Funktionsträgerbasis größer als ein 1,2-faches eines Durchmessers einer Werkzeugaufnahme mit maximalem Durchmesser im Revolverkopf.

Das heißt, dass die Möglichkeit besteht, in der Funktionsträgerbasis noch größere und schwerere Werkzeuge aufzunehmen als dies im Revolverkopf der Fall ist, so dass gerade bei der Bearbeitung schwerer und großer Werkstücke die Möglichkeit besteht, die besonders schweren und auch großen Werkzeuge in der Funktionsträgerbasis aufzunehmen und somit Probleme aufgrund der Größe und des Gewichts derartiger Werkzeuge im Revolverkopf zu vermeiden, die entstehen, wenn solche Werkzeuge im Revolverkopf eingesetzt werden müssen.

Insbesondere ist vorzugsweise vorgesehen, dass das in der Werkzeugaufnahme der Funktionsträgerbasis angeordnete Werkzeug ein Innenbearbeitungswerkzeug ist.

Besonders bei Innenbearbeitungswerkzeugen für große Werkstücke bestehen Probleme, diese an einen Revolverkopf anzuordnen, da diese einerseits sehr schwer sind und andererseits sehr groß sind, das heißt insbesondere eine große Länge aufweisen, so dass dadurch andere Bearbeitungen mit Werkzeugen des Revolverkopfes erheblich eingeschränkt, wenn nicht sehr stark behindert oder unmöglich sind.

Wenn somit derartige Innenbearbeitungswerkzeuge in die Werkzeugaufnahme der Funktionsträgerbasis verlagert werden können, erhöht sich die Flexibilität und Einsatzfähigkeit sämtlicher Werkzeuge am Revolverkopf.

Insbesondere ist dabei vorgesehen, dass das in der Werkzeugaufnahme in der Funktionsträgerbasis angeordnete Werkzeug sich parallel zu Z-Achse erstreckt, denn gerade derartige, sich mit großer Länge parallel zur Z-Achse erstreckende Werkzeuge haben das Problem, dass sie im Revolverkopf nur schwer oder gar nicht untergebracht werden können, so dass damit die erfindungsgemäße Lösung mit der Anordnung dieser Werkzeuge an der Funktionsträgerbasis eine Vielzahl von Bearbeitungen bei sehr kompakt bauender Werkzeugmaschine möglich macht.

Eine besonders günstige Lösung sieht vor, dass in der Werkzeugaufnahme in der Funktionsträgerbasis angeordnete Werkzeuge eine Länge aufweisen, welche mindestens 20% des maximalen Abstandes der Funktionsträgerbasis von der Werkstückaufnahme beträgt.

Noch vorteilhafter ist es, wenn die Länge dieser Werkzeuge mindestens 30%, noch besser 35%, des maximalen Abstandes der Funktionsträgerbasis von der Werkstückaufnahme beträgt.

Das heißt, dass sehr lange Werkzeuge, insbesondere somit auch sehr lange Innenbearbeitungswerkzeuge, sich in einfacher Weise in der Werkzeugaufnahme der Funktionsträgerbasis aufnehmen lassen ohne dass dadurch Einschränkungen hinsichtlich der Bearbeitung mit den anderen Werkzeugen entstehen.

Um eine Vielzahl von Werkzeugen auch in der Werkzeugaufnahme an der Funktionsträgerbasis zur Verfügung zu haben, ist vorzugsweise vorgesehen, dass in die Werkzeugaufnahme Werkzeuge aus einem Werkzeugmagazin einwechselbar sind.

Vorzugsweise erfolgt dies dadurch, dass die Werkzeugaufnahme in eine Übergabeposition bringbar ist, in welcher Werkzeuge zwischen der Werkzeugaufnahme und dem Werkzeugmagazin austauschbar sind.

Beispielsweise ist dabei das Werkzeugmagazin so aufgebaut, dass es ein relativ zur Übergabeposition bewegbares Mehrfachspeicherelement aufweist, mit welchem entweder leere Speicheraufnahmen oder mit Werkzeugen bestückte Speicheraufnahmen in die Übergabeposition bringbar sind.

Insbesondere ist dabei vorgesehen, dass die in dem Werkzeugmagazin bereitgestellten Werkzeuge für die Werkzeugaufnahme in der Funktionsträgerbasis eine Länge aufweisen, die mindestens 20%, noch besser mindestens 30%, des maximalen Abstandes der Funktionsträgerbasis von der Werkstückaufnahme beträgt.

Hinsichtlich der Ausbildung der Werkstückabstützeinheit wurden bislang keine näheren Angaben gemacht.

Besonders vorteilhaft ist es, wenn die Werkstückabstützeinheit um eine zur Werkstückspindelachse koaxiale Achse drehbar relativ zur Funktionsträgerbasis positionierbar ist.

Eine vorteilhafte Lösung sieht dabei vor, dass die Werkstückabstützeinheit als Gegenspindeleinheit ausgebildet ist.

Beispielsweise in dem Fall einer Gegenspindeleinheit ist dann zweckmäßigerweise ein Gegenspindelantrieb vorgesehen, mit welchem die Gegenspindel rotierend antreibbar ist.

Darüber hinaus ist es, insbesondere um ein Werkstück von der Werkstückspindel in die Gegenspindel übergeben zu können, vorgesehen, dass die Gegenspindeleinheit durch den Gegenspindelantrieb um die Werkstückspindelachse als C-Achse gesteuert drehbar ist.

Alternativ dazu sieht eine andere Lösung vor, dass die Werkstückabstützeinheit als Reitstock ausgebildet ist.

Bei einem derartigen Reitstock ist vorzugsweise vorgesehen, dass der Reitstock eine in Richtung der Z-Achse bewegbar relativ zur Funktionsträgerbasis angeordnete Reitstockspitze aufweist, die in Richtung der Werkstückaufnahme kraftbeaufschlagbar ist.

Zweckmäßigerweise ist dabei vorgesehen, dass die Reitstockspitze durch eine Haltekraft beaufschlagbar ist, so dass diese mit einer variabel einstellbaren Haltekraft an das Werkstück anlegbar ist.

Insbesondere ist dabei vorgesehen, dass die Reitstockspitze hydraulisch mit der Haltekraft beaufschlagbar ist.

Hinsichtlich der Ausbildung des Revolverkopfes wurden bislang keine näheren Angaben gemacht.

Insbesondere ist vorgesehen, dass am Revolverkopf eine Werkzeugspindeleinheit angeordnet ist, die ein am Revolverkopf sitzendes Werkzeugspindelgehäuse, eine Werkzeugspindel und einen Werkzeugspindelantrieb aufweist.

Der Werkzeugspindelantrieb kann dabei in unterschiedlichster Art und Weise ausgebildet sein.

Eine vorteilhafte Möglichkeit sieht vor, dass der Werkzeugspindelantrieb als Spindelmotor ausgebildet ist, das heißt, dass ein Rotor des Werkzeugspindelantriebs ummittelbar auf der Werkzeugspindel sitzt, während ein Stator in dem Werkzeugspindelgehäuse sitzt.

Eine andere vorteilhafte Möglichkeit sieht vor, dass der Werkzeugspindelantrieb einen durch eine Revolverkopfbewegungseinheit hindurchgeführten Antriebsstrang und einen mit dem Antriebsstrang gekoppelten, im Revolvergehäuse angeordneten Werkzeugspindelantriebsmotor aufweist.

Dabei ist zweckmäßigerweise der Antriebsstrang mit der Werkzeugspindel durch ein im Revolverkopf angeordnetes Kopplungsgetriebe gekoppelt.

Das Kopplungsgetriebe kann dabei ein einfaches Kopplungsgetriebe sein, welches mit einem konstanten Übersetzungsverhältnis arbeitet.

Alternativ dazu ist vorzugsweise vorgesehen, dass das Kopplungsgetriebe ein Wechselgetriebe ist, so dass die Übersetzung zwischen dem Antriebsstrang und der Werkstückspindel unterschiedlich gewählt werden kann.

Hinsichtlich der Ausrichtung einer Werkstückspindelachse der Werkstückspindel relativ zur Revolverkopfachse wurden bislang keine näheren Angaben gemacht.

So sieht eine vorteilhafte Lösung vor, dass die Werkzeugspindelachse der Werkzeugspindel parallel zur Revolverkopfachse ausgerichtet ist.

Alternativ ist es aber ebenfalls denkbar, dass die Werkzeugspindelachse der Werkzeugspindel quer zur Revolverkopfachse ausgerichtet ist.

In diesem Fall kann die Werkzeugspindelachse so ausgerichtet sein, dass sie schräg zur Revolverkopfachse verläuft, wie die Aufnahmeachsen der ersten Werkzeugaufnahmen oder der zweiten Werkzeugaufnahmen.

Eine weitere zweckmäßige Lösung sieht jedoch vor, dass die Werkzeugspindelachse senkrecht zur Revolverkopfachse ausgerichtet ist.

So sieht eine besonders günstige Lösung vor, dass die am Revolverkopf angeordnete Werkzeugspindeleinheit in den Revolverkopf integriert ist, das heißt nicht als nicht schnellwechselbar auf den Revolverkopf aufgesetzte Werkstückspindeleinheit ausgebildet ist, sondern einen Bestandteil des Revolverkopfes darstellt, insbesondere dadurch, dass das Werkstückspindelgehäuse in den Revolverkopfes eingebaut und somit Teil desselben ist.

Hinsichtlich der Ausbildung des Revolverkopfes wurden bislang keine weiteren Angaben gemacht.

Eine vorteilhafte Lösung sieht vor, dass der Werkzeugrevolver als Kronenrevolver mit einem Kronenrevolverkopf ausgebildet ist, dass das Revolvergehäuse relativ zur Werkzeugträgerbasis um eine quer zur Z-Achse und quer zur X-Achse verlaufende B-Achse durch die Maschinensteuerung gesteuert drehbar ist und dass die Revolverkopfachse quer zur B-Achse verläuft.

Durch diese Konstruktion besteht die Möglichkeit, den Revolverkopf optimal relativ zum Werkstück auszurichten, um die am Kronenrevolverkopf vorgesehenen Werkzeuge optimal einsetzen können.

Prinzipiell könnten am Kronenrevolverkopf Werkzeugaufnahmen in beliebiger Art und Weise angeordnet sein.

Eine besonders vorteilhafte Lösung sieht vor, dass der Kronenrevolverkopf einen Satz von ersten Werkzeugaufnahmen aufweist, die auf einer dem Revolvergehäuse abgewandten Seite des Kronenrevolverkopfes angeordnet sind.

Vorzugsweise ist dabei vorgesehen, dass die ersten Werkzeugaufnahmen quer, insbesondere schräg, zur Revolverkopfachse ausgerichtete Aufnahmeachsen aufweisen.

Dabei könnten die Winkel der Aufnahmeachsen zur Revolverkopfachse noch variieren.

Besonders günstig ist es jedoch, wenn die ersten Werkzeugaufnahmen mit ihren Aufnahmeachsen in demselben Winkel zur Revolverkopfachse verlaufen.

Als besonders günstig hat sich eine Lösung erwiesen, bei welcher die Aufnahmeachsen der ersten Werkzeugaufnahmen mit der Revolverkopfachse einen Winkel im Bereich zwischen 10° und 40° einschließen, wobei es besonders günstig ist, wenn der Winkel zwischen 20° und 30° liegt.

Ferner ist vorzugsweise vorgesehen, dass der Kronenrevolverkopf einen Satz von zweiten Werkzeugaufnahmen aufweist, die auf einer dem Revolvergehäuse zugewandten Seite des Kronenrevolverkopfes angeordnet sind.

Mit derartigen zweiten Werkzeugaufnahmen besteht die Möglichkeit, die Zahl der am Kronenrevolverkopf anzuordnenden Werkzeuge zu erhöhen.

Besonders günstig ist es dabei, wenn die zweiten Werkzeugaufnahmen quer, insbesondere schräg, zur Revolverkopfachse ausgerichtete Aufnahmeachsen aufweisen.

Vorzugsweise sind dabei die zweiten Werkzeugaufnahmen mit ihren Aufnahmeachsen in demselben Winkel zur Revolverkopfachse angeordnet, das heißt, alle zweiten Werkzeugaufnahmen haben Aufnahmeachsen, die in demselben Winkel zur Revolverkopfachse verlaufen.

Die Winkel der Aufnahmeachsen für die zweiten Werkzeugaufnahmen wurden dabei nicht näher spezifiziert.

Vorzugsweise ist dabei vorgesehen, dass die Aufnahmeachsen der zweiten Werkzeugaufnahmen mit der Revolverkopfachse einen Winkel im Bereich zwischen 100° und 130°, vorzugsweise 110° und 120°, einschließen.

Hinsichtlich der relativen Anordnung der ersten Werkzeugaufnahmen und der zweiten Werkzeugaufnahmen zueinander wurden bislang keine näheren Angaben gemacht.

So sieht eine bevorzugte Lösung vor, dass die Aufnahmeachsen von in einer Umlaufrichtung um die Revolverkopfachse aufeinanderfolgenden ersten und zweiten Werkzeugaufnahmen in in einem Winkelabstand voneinander verlaufenden Radialebenen durch die Revolverkopfachse liegen.

Das heißt, dass die Aufnahmeachsen zwar jeweils mit der Revolverkopfachse einen Winkel einschließen, dabei jedoch zusammen mit der Revolverkopfachse jeweils in einer Radialebene liegen, wobei vorzugsweise jede Aufnahmeachse in einer Radialebene liegt, die in einem Winkelabstand von der Radialebene der anderen Aufnahmeachse angeordnet sind.

Es ist zweckmäßig, wenn die Radialebenen einen konstanten Winkelabstand voneinander aufweisen, das heißt, dass die Radialebenen eine Ebenenschar bilden, wobei die einzelnen in der Umlaufrichtung aufeinanderfolgenden Ebenen dieser Ebenenschar einen konstanten Winkelabstand voneinander aufweisen.

Besonders günstig ist es, wenn in der Umlaufrichtung erste und zweite Werkzeugaufnahmen aufeinanderfolgen, das heißt abwechselnd aufeinanderfolgen.

Bei einer möglichen Ausbildung des Revolverkopfes wäre es denkbar, die Werkstückspindeleinheit derart klein auszubilden, dass sie entsprechend einer der ersten oder zweiten Werkzeugaufnahmen in den Kronenrevolverkopf integriert ist.

Eine besonders günstige Lösung, insbesondere zur Ausbildung einer leistungsfähigen Werkzeugspindeleinheit sieht vor, dass die Werkzeugspindeleinheit in einem von ersten Werkzeugaufnahmen und zweiten Werkzeugaufnahmen freien Kreissegment des Revolverkopfes angeordnet ist.

Das heißt, dass der Revolverkopf so ausgebildet ist, dass er ein Kreissegment aufweist, in welchem weder erste noch zweite Werkzeugaufnahmen vorgesehen sind und dass in diesem Kreissegment dann die Werkzeugspindeleinheit angeordnet ist.

Dies ermöglicht es, insbesondere bei einer leistungsfähigen Werkzeugspindeleinheit, den für diese erforderlichen Bauraum zu schaffen.

Ferner hat diese Lösung noch den Vorteil, dass dadurch die Werkzeuge in den ersten und zweiten Werkzeugaufnahmen bei einer Bearbeitung des Werkstücks mit dem angetriebenen Werkzeug nicht stören, wenn das Kreissegment des Kronenrevolverkopfes, in welchem die Werkzeugspindeleinheit angeordnet ist, sich in einem ausreichend großen Winkelbereich um die Revolverkopfachse erstreckt.

Hinsichtlich der Ausbildung des Werkzeugrevolvers und der Anordnung desselben wurden bislang keine näheren Angaben gemacht.

So sieht eine vorteilhafte Lösung vor, dass das Revolvergehäuse relativ zur Werkzeugträgerbasis durch ein B-Bewegungssystem um die B-Achse drehbar gehalten ist, so dass das Revolvergehäuse unmittelbar selbst um die B-Achse drehbar ist.

Beispielsweise ist dabei vorgesehen, dass das B-Bewegungssystem von der Werkzeugträgerbasis getragen ist.

Insbesondere ist erfindungsgemäß das B-Bewegungssystem durch die Maschinensteuerung ansteuerbar, insbesondere lagegeregelt ansteuerbar.

Hinsichtlich der Ausbildung des B-Bewegungssystems wurden dabei keine näheren Angaben gemacht.

So sieht eine bevorzugte Lösung vor, dass das B-Bewegungssystem eine Drehlagerung und einen B-Achsantrieb zum Drehen des Revolvergehäuses um die B-Achse aufweist.

Dabei ist zweckmäßigerweise die Drehlagerung so ausgebildet, dass sie das Revolvergehäuse drehbar lagert.

Ferner ist vorzugsweise der B-Achsantrieb so ausgebildet, dass er ein ins Langsame übersetzendes Getriebe aufweist, welches antriebsseitig das Revolvergehäuse um die Drehachse drehend antreibt.

Prinzipiell könnte das B-Bewegungssystem so ausgebildet sein, dass die Drehlagerung in verschiedenen diskreten Drehstellungen festlegbar ist, beispielsweise mit einer Hirth-Verzahnung.

Eine besonders günstige Lösung sieht vor, dass das B-Bewegungssystem an seiner Abtriebsseite mit einer Bremseinheit zum drehfesten Festlegen der jeweiligen Drehstellung versehen ist.

Eine derartige Bremseinheit hat den Vorteil, dass diese nicht eine Drehung in diskrete Drehstellungen erfordert, sondern die Möglichkeit schafft, das B-Bewegungssystem in beliebigen Drehstellungen drehfest festzulegen.

Vorzugsweise ist dabei die Bremseinheit als Scheibenbremse ausgebildet, da diese bei einfachem Aufbau die Möglichkeit schafft, große Haltemomente zu erzeugen.

Eine aufgrund der Einfachheit und Betriebssicherheit vorteilhafte Lösung sieht vor, dass die Scheibenbremse einen feststehenden Bremsbacken und relativ zu den feststehenden Bremsbacken zwischen einer Bremsstellung und einer Lösestellung hin und her bewegbaren Bremsbacken umfasst.

Insbesondere ist dabei vorgesehen, dass die Bremsscheibe zwischen feststehenden und bewegbaren Bremsbacken eingreift und in der Lösestellung berührungsfrei zu den feststehenden und den bewegbaren Bremsbacken verläuft und zum Erreichen der Bremsstellung der bewegbare Bremsbacken eine Deformation der Bremsscheibe bis zur Anlage an den feststehenden Bremsbacken erzeugt.

Hinsichtlich des Antriebs des Revolverkopfes wurden bislang keine näheren Angaben gemacht.

Prinzipiell wäre eine konventionelle Ausbildung des Antriebs des Revolverkopfes denkbar.

Insbesondere sieht eine vorteilhafte Ausführungsform jedoch vor, dass der Revolverkopf durch eine am Revolvergehäuse angeordnete Revolverkopfbewegungseinheit um die Revolverkopfachse drehbar ist.

Insbesondere ist dabei vorgesehen, dass die Revolverkopfbewegungseinheit eine Drehlagerung und einen Revolverkopfdrehantrieb aufweist.

Der Revolverkopfdrehantrieb könnte dabei ein konventioneller Revolverkopfdrehantrieb sein.

Eine besonders günstige Lösung sieht jedoch vor, dass der Revolverkopfdrehantrieb einen Hochmomentdirektantriebsmotor, insbesondere einen Torque-Motor, umfasst, mit dessen Rotor der Kronenrevolverkopf verbunden ist und dessen Stator fest im Revolvergehäuse angeordnet ist.

Der Vorteil eines Hochmomentdirektantriebs-Motors ist der, dass mit diesem kein Untersetzungsgetriebe erforderlich ist, sondern der Revolverkopf unmittelbar mit dem Rotor gekoppelt sein kann, wobei der Hochmomentdirektantriebs-Motor die Möglichkeit schafft, ausreichend große Drehmomente zu erzeugen, um den Revolverkopf in seiner jeweiligen Stellung zu halten.

Insbesondere ist dabei vorgesehen, dass der Revolverkopfdrehantrieb durch die Maschinensteuerung lagegeregelt ansteuerbar ist.

Um zu erreichen, dass der Revolverkopfdrehantrieb dann entlastet wird, wenn der Revolverkopf feststehen kann, ist vorzugsweise vorgesehen, dass die Drehstellungen des Revolverkopfes durch eine Bremseinheit in jeder Drehstellung relativ zum Revolvergehäuse drehfest festlegbar sind.

Im Zusammenhang mit der bisherigen Erläuterung der erfindungsgemäßen Lösung wurden keine näheren Angaben dazu gemacht, wie die Relativbewegung der Werkstückaufnahme und des Werkzeugs in einer X-Richtung erfolgen soll.

Eine besonders günstige Lösung sieht vor, dass die Relativbewegung zwischen der Werkstückaufnahme und dem Werkzeug in Richtung einer X-Achse durch ein X-Bewegungssystem erzeugbar ist.

Insbesondere ist dabei das X-Bewegungssystem so ausgebildet, dass es einen längs X-Führungen bewegbaren X-Schlitten umfasst.

Vorzugsweise umfasst das X-Bewegungssystem außerdem einen X-Achsenantrieb.

Das X-Bewegungssystem könnte prinzipiell verschiedene Teile der Werkzeugmaschine relativ zueinander bewegen.

Eine besonders günstige Lösung sieht vor, dass das X-Bewegungssystem zwischen der Werkzeugträgerbasis und dem B-Bewegungssystem wirksam ist.

Dabei ist vorzugsweise das X-Bewegungssystem an der Werkzeugträgerbasis angeordnet und trägt das B-Bewegungssystem.

Darüber hinaus ist vorzugsweise vorgesehen, dass die Relativbewegung zwischen der Werkstückaufnahme und dem Werkzeug in Richtung einer Z-Achse durch ein Z-Bewegungssystem erzeugbar ist.

Zweckmäßigerweise umfasst dabei das Z-Bewegungssystem einen längs der Z-Führungen bewegbaren Z-Schlitten.

Ferner ist vorzugsweise vorgesehen, dass das Z-Bewegungssystem einen Z-Achsenantrieb aufweist.

Darüber hinaus ist zweckmäßigerweise das Z-Bewegungssystem zwischen dem Maschinengestell und der Werkzeugträgerbasis wirksam.

Insbesondere ist vorgesehen, dass das Z-Bewegungssystem die Werkzeugträgerbasis trägt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Frontansicht eines Ausführungsbeispiels einer erfindungsgemäßen Werkzeugmaschine;
- Fig. 2: eine Draufsicht von oben auf die Werkzeugmaschine gemäß Fig. 1;
- Fig. 3: einen Schnitt längs Linie 3-3 in Fig. 1;
- Fig. 4: einen Schnitt längs Linie 4-4 in Fig. 1;
- Fig. 5: eine Darstellung ähnlich Fig. 4 einer Werkzeugträgerbasis mit einem X-Bewegungssystem und einem B-Bewegungssystem;
- Fig. 6: eine vergrößerte Darstellung des B-Bewegungssystems gemäß Fig. 5;
- Fig. 7: eine nochmals vergrößerte Darstellung eines Teils des B-Bewegungssystems im Bereich einer Bremseinheit;
- Fig. 8: einen schematischen Schnitt durch einen Werkzeugrevolver mit Darstellung eines Revolverkopfbewegungssystems und einer Werkzeugspindeleinheit;
- Fig. 9: eine ausschnittsweise vergrößerte Darstellung des Revolverkopfbewegungssystems im Bereich einer Bremseinheit;
- Fig. 10: eine vergrößerte Draufsicht auf den Werkzeugrevolver ähnlich Fig. 3;
- Fig. 11: einen Schnitt längs Linie 11-11 in Fig. 3;
- Fig. 12: eine Ansicht ähnlich Fig. 3 eines zweiten Ausführungsbeispiels einer erfindungsgemäßen Werkzeugmaschine und
- Fig. 13: eine Ansicht ähnlich Fig. 10 des zweiten Ausführungsbeispiels der erfindungsgemäßen Werkzeugmaschine.

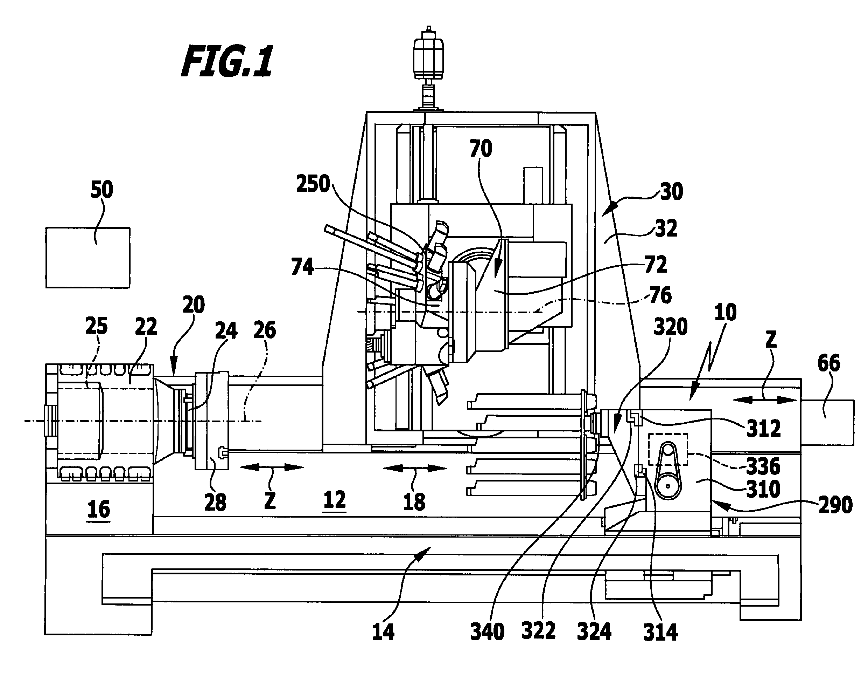

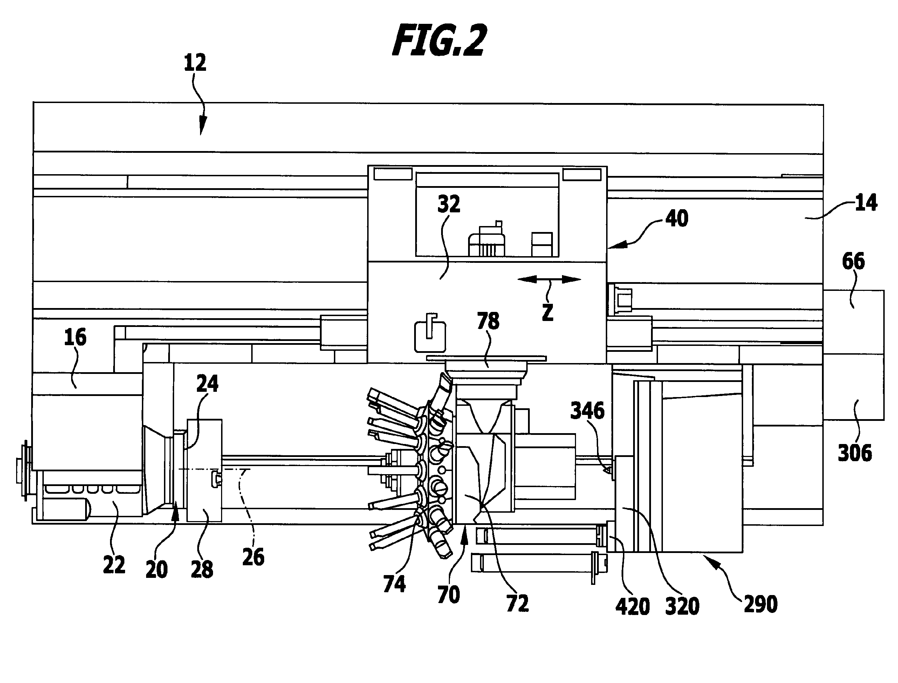

Ein Ausführungsbeispiel einer erfindungsgemäßen Werkzeugmaschine, dargestellt in Fig. 1 bis 4, umfasst ein als Ganzes mit 10 bezeichnetes Maschinengestell, welches einen Grundkörper 12 und einen Vorbau 14 aufweist, an welchem mittels eines Werkstückspindelträgers 16 eine als Ganzes mit 20 bezeichnete Werkstückspindeleinheit angeordnet ist, die ein Werkstückspindelgehäuse 22 aufweist, in welchem eine Werkstückspindel 24 um eine Werkstückspindelachse 26 drehbar gelagert und mittels eines Werkstückspindelantriebs 25 rotierend oder als E-Achse und gesteuert durch eine Maschinensteuerung 50 antreibbar ist, wobei die Werkstückspindel 24 eine Werkstückaufnahme 28 zur Fixierung von zu bearbeitenden Werkstücken trägt.

Die Werkstückspindelachse 26 erstreckt sich dabei vorzugsweise ungefähr parallel zu einer Längsrichtung 18 des Grundkörpers 12 des Maschinengestells 10.

An dem Grundkörper 12 des Maschinengestells 10 ist eine als Ganzes mit 30 bezeichnete Werkzeugträgereinheit vorgesehen, welche eine Werkzeugträgerbasis 32 umfasst, die mittels eines Z-Bewegungssystems 40 an dem Grundkörper 12 in einer zur Werkstückspindelachse 26 parallelen Z-Richtung geführt ist, wobei das Z-Bewegungssystem 40 ein Z-Schlittensystem 42 und einen Z-Achsantrieb 44 umfasst, der durch die Maschinensteuerung 50 ansteuerbar ist.

Das Z-Schlittensystem 42 weist Z-Führungen 52 und 54 auf, die am Grundkörper 12 angeordnet sind, und an welchen Z-Führungswagen 56 und 58 geführt sind, die ihrerseits an der Werkzeugträgerbasis 32 angeordnet sind und mit dieser einen Z-Schlitten 60 bilden.

Der Z-Achsantrieb 44 weist beispielsweise eine Antriebsspindel 62 auf, die drehbar, jedoch unverschieblich und sich in Z-Richtung erstreckend am Grundkörper 12 gelagert ist und mit einer mit der Werkzeugträgerbasis 32 verbundenen Spindelmutter 64 zusammenwirkt, wobei die Antriebsspindel 62 durch einen Z-Antriebsmotor 66 antreibbar ist.

Durch den Z-Achsantrieb 44 ist somit die Werkzeugträgerbasis 32 in der Z-Richtung relativ zum Grundkörper 12 gesteuert, insbesondere lagegeregelt, bewegbar und in Z-Richtung relativ zur Werkstückaufnahme 28 in beliebigen Positionen positionierbar.

Die Werkzeugträgerbasis 32 der Werkzeugträgereinheit 30 trägt ihrerseits noch einen als Ganzes mit 70 bezeichneten Werkzeugrevolver, welcher ein Revolvergehäuse 72 umfasst, an welchem ein Revolverkopf 74 um eine Revolverkopfachse 76 drehbar gelagert ist (Fig. 1 bis 3 und 10).

Ohne eine gesteuerte Y-Achse liegt die Revolverkopfachse 76 stets in einer durch die Werkstückspindelachse 26 hindurchverlaufenden Bearbeitungsebene BE.

Ist bei einer zeichnerisch nicht dargestellten Variante eine durch die Maschinensteuerung 50 steuerbare Y-Achse vorhanden, so ist die Revolverkopfachse quer zur Bearbeitungsebene BE bewegbar.

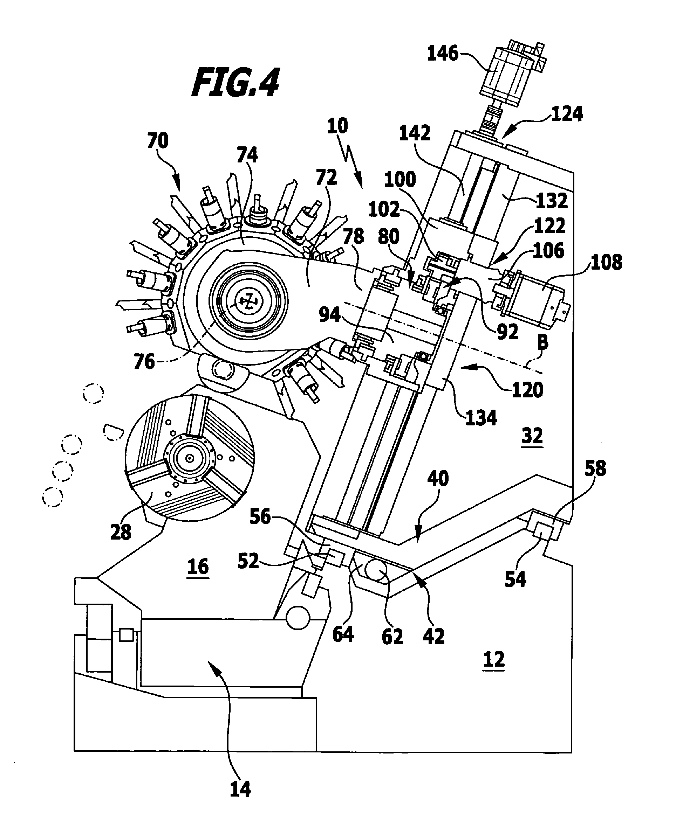

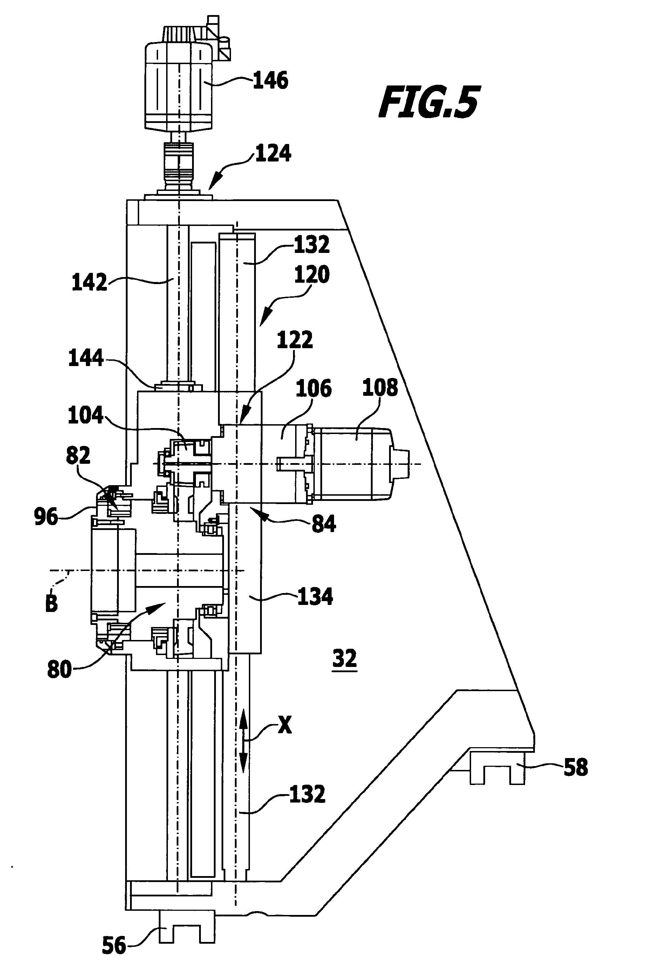

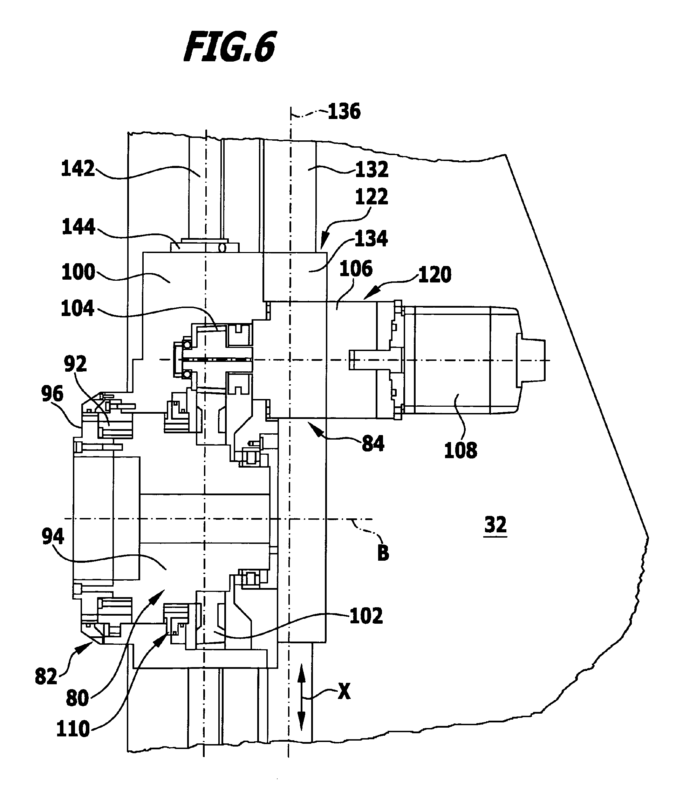

Das Revolvergehäuse 72 ist seinerseits an einem Fuß 78 mittels einen B-Bewegungssystems 80 (Fig. 4) um eine B-Achse B, die senkrecht zur Bearbeitungsebene BE ausgerichtet ist, drehbar, wobei das B-Bewegungssystem 80 eine Drehlagerung 82 für das Revolvergehäuse 72 sowie einen B-Achsantrieb 84 aufweist (Fig. 5 und Fig. 6).

Die Drehlagerung 82 wird durch ein Axial/Radiallager 92 gebildet, das einen Drehkörper 94 um die B-Achse drehbar lagert, wobei der Drehkörper 94 mit einer stirnseitigen Aufnahme 96 für den Fuß 78 des Revolverkopfgehäuses 72 versehen ist, so dass das Revolverkopfgehäuse 72 über das Axial/Radiallager 92 um die B-Achse B drehbar gelagert ist.

Das Axial/Radiallager 92 sitzt seinerseits in einem Basiskörper 100 des B-Bewegungssystems 80.

Der Drehachsantrieb 84 umfasst ein mit dem Drehkörper 94 drehfest verbundenes und vorzugsweise auf diesem sitzenden Antriebzahnrad 102, das durch ein Abtriebsritzel 104 eines ins Langsame übersetzenden Getriebes 106 antreibbar ist, welcher seinerseits durch einen B-Antriebsmotor 108 angetrieben und mit dem B-Antriebsmotor 108 an dem Basiskörper 100 gehalten ist, wobei der B-Antriebsmotor 108 durch die Maschinensteuerung 50 so ansteuerbar ist, dass der Drehachsantrieb 84 das Revolvergehäuse 72 lagegeregelt in jeder Drehlage halten kann.

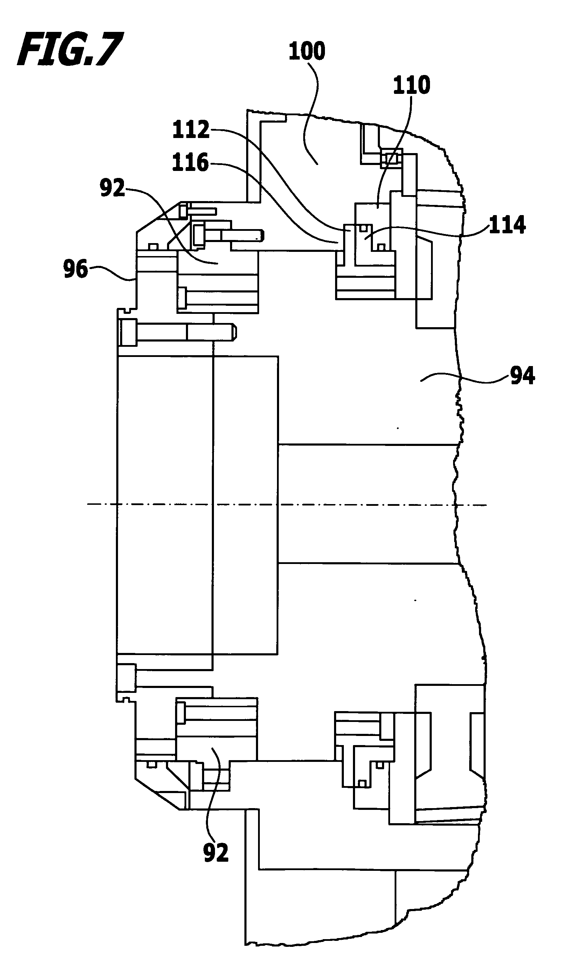

Um den Drehkörper 94 in den Drehlagen, in denen dieser lagegeregelt durch den B-Achsantrieb 84 gehalten wird, noch zusätzlich drehfest festlegen zu können, ist eine als Ganzes mit 110 bezeichnete Bremseinheit vorgesehen, die eine drehfest mit dem Drehkörper 94 verbundene Bremsscheibe 112 aufweist, die zwischen einem bewegbaren Bremsbacken 114 und einem feststehenden Bremsbacken 116 angeordnet ist und bei Bewegen des bewegbaren Bremsbackens 114 zwischen dem bewegbaren Bremsbacken 114 und dem feststehenden Bremsbacken 116 einspannbar ist (Fig. 7).

Der feststehende Bremsbacken 116 ist dabei Teil des Basiskörpers 100 und der bewegbare Bremsbacken 114 in Richtung des feststehenden Bremsbackens 116 bewegbar am Basiskörper 100 gelagert.

Damit besteht mit der erfindungsgemäßen Bremseinheit 110 die Möglichkeit, den Drehkörper 94 relativ zum Basiskörper 100 in jeder durch die Lageregelung des B-Achsantriebs 84 vorgegebenen Drehlage des Drehkörpers 94 den Drehkörper 94 über die Bremseinheit 110 relativ zum Basiskörper 100 mechanisch festzulegen.

Auch die Bremseinheit 110 ist durch die Maschinensteuerung 50 ansteuerbar.

Bei einer bevorzugten Ausführungsform ist die Bremseinheit 110 so ausgelegt, dass diese in der Lage ist, die Drehstellung des Werkzeugrevolvers 70 bei einer Bearbeitung eines Werkstücks auch bei den einwirkenden Bearbeitungskräften zu halten, so dass die Möglichkeit besteht, mittels der Maschinensteuerung 50 die Bremseinheit 110 zu aktivieren und die für die Aufrechterhaltung der Drehlage von der Lageregelung benötigte elektrische Leistung des B-Achsantriebs 84 zu reduzieren, und im Extremfall auf Null zu führen, da die Aufrechterhaltung der Drehlage durch die Bremseinheit 110 übernommen wird.

Bevor dann die Bremseinheit 110 wieder gelöst wird und die Lageregelung und Aufrechterhaltung der Drehlage wiederum durch den B-Achsantrieb 84 übernommen werden soll, wird die zur Lageregelung erforderliche elektrische Leistung des B-Achsantriebs wieder auf die erforderliche Leistung vor Einwirken der Bremseinheit 110 erhöht, so dass dann nach Lösen der Bremseinheit 110 der B-Achsantrieb wieder in der Lage ist, die Drehlage des Werkzeugrevolvers 70 aufrecht zu erhalten oder gegebenenfalls zu verändern.

Mit dem B-Bewegungssystem 80 kann die Revolverkopfachse 76 in der Bearbeitungsebene BE gedreht werden.

Das B-Bewegungssystem 80 ist über ein als Ganzes mit 120 bezeichnetes X-Bewegungssystem, welches ein X-Schlittensystem 122 und einen X-Achsantrieb 124 aufweist an der Trägerbasis 32 gehalten und relativ zu dieser in einer zur Bearbeitungsebene BE parallelen X-Richtung X bewegbar.

Bei dem dargestellten Ausführungsbeispiel trägt das X-Schlittensystem 122 den Basiskörper 100 und somit das B-Bewegungssystem 80 mit dem Werkzeugrevolver 70.

Das X-Schlittensystem 122 erlaubt eine Bewegung in der X-Richtung, die quer zur Z-Richtung verläuft, und umfasst an der Werkzeugträgerbasis 32 vorgesehene X- Führungen 132, an denen ein X-Schlitten 134 in Richtung der X-Achse und parallel zu einer Ebene 136 ausgerichtet bewegbar geführt ist, wobei die Ebene 136 wiederum parallel zur Werkstückspindelachse 26 und somit auch parallel zur Z-Richtung Z verläuft, und außerdem die B-Achse 72 senkrecht zur Ebene 136 ausgerichtet ist.

Zum Bewegen des X-Schlittens 134 in Richtung der X-Achse ist der X-Achsantrieb 124 vorgesehen, welcher eine Antriebsspindel 142 aufweist, die relativ zur Werkzeugträgerbasis 32 drehbar, jedoch in ihrer Längsrichtung unverschiebbar an dieser gelagert ist, und mit einer an dem X-Schlitten 92 angeordneten Spindelmutter 144 zusammenwirkt.

Dabei ist die Antriebsspindel 142 durch einen X-Antriebsmotor 146 antreibbar.

Durch das X-Bewegungssystem 120 ist das gesamte B-Achsensystem 70 in der X-Richtung X relativ zur Werkzeugträgerbasis 32 bewegbar.

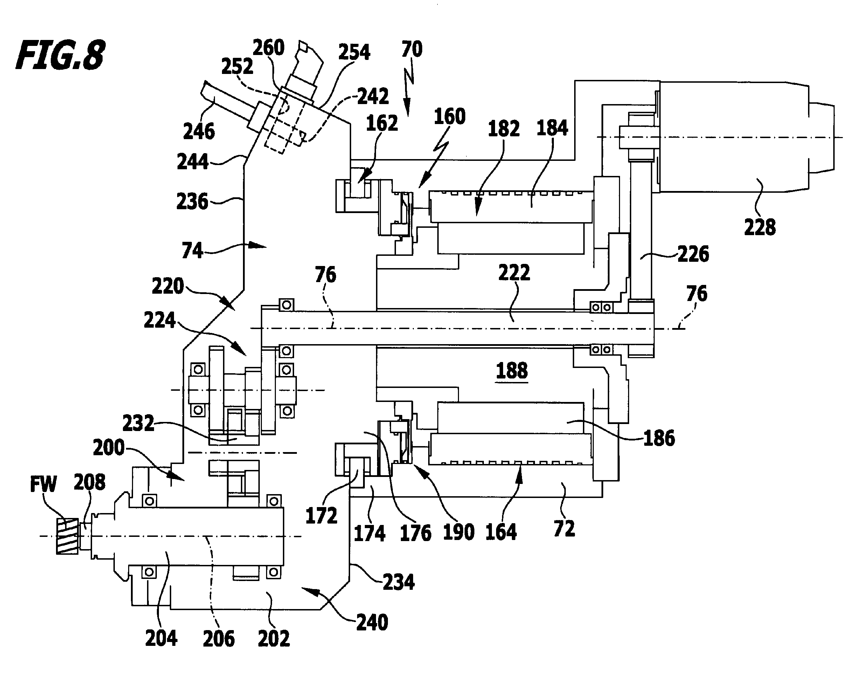

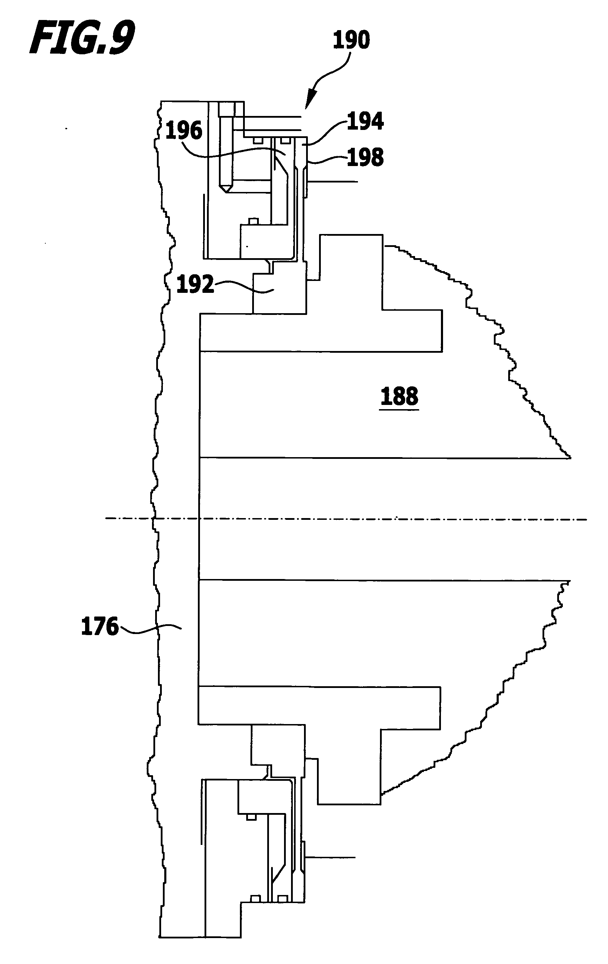

Bei der erfindungsgemäßen Werkzeugmaschine ist der Revolverkopf 74 relativ zum Revolvergehäuse 72 durch eine als Ganzes mit 160 bezeichnete Revolverkopfbewegungseinheit drehbar und drehfest festlegbar, wobei die Revolverkopfbewegungseinheit 160 eine Drehlagerung 162 sowie einen Revolverkopfdrehantrieb 164 aufweist (Fig. 8, Fig. 9).

Die Drehlagerung 162 wird dabei gebildet, durch ein Axial/Radiallager 172, welches an einem dem Revolverkopf 74 zugewandten Bereich des Revolvergehäuses 72 angeordnet ist und einen Lageransatz 176 des Revolverkopfes 74 aufnimmt, so dass durch dieses Axial/Radiallager 172 der gesamte Revolverkopf 74 an dem Revolvergehäuse 72 drehbar gelagert ist.

Ferner umfasst der Revolverkopfdrehantrieb 164 einen Torque-Motor 182, der einen stationär im Revolvergehäuse 72 angeordneten Stator 184 und einen Rotor 186 aufweist, der fest an einem mit dem Lageransatz 176 des Revolverkopfes 74 verbundenen Rotorträger 188 gehalten ist, so dass der Rotor 186 synchron mit dem Revolverkopf 74 drehbar ist.

Auch der Torque-Motor 182 ist so ausgebildet, dass mit der Maschinensteuerung 50 eine lagegeregelte Drehbarkeit des Revolverkopfes 74 um die Revolverkopfachse 76 möglich ist und dass außerdem sämtliche, auf den Revolverkopf 74 bei einer Bearbeitung eines Werkstücks wirkenden Momente von dem Torque-Motor 182 unter Beibehaltung der Lage aufgenommen werden können.

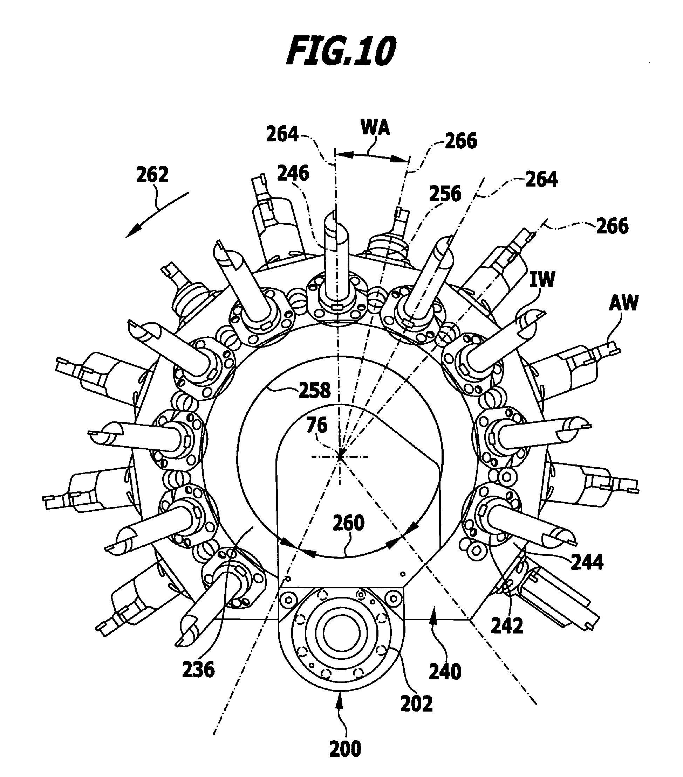

Ferner ist der Einheit aus dem Rotor 186 und dem Revolverkopf 74 eine in Fig. 9 und 10 dargestellte Bremseinheit 190 zugeordnet, welche einen fest mit dem Rotorträger 188 des Torque-Motors 182 verbundenen Stützring 192 aufweist, von welchem ausgehend sich radial nach außen eine Bremsscheibe 194 erstreckt (Fig. 9).

Die Bremsscheibe 194 ist zwischen einem bewegbaren Bremskörper 196 und einem feststehenden Bremskörper 198 angeordnet, wobei der bewegbare Bremskörper 196 und der feststehende Bremskörper 198 fest mit dem Revolvergehäuse 72 verbunden sind.

Die Bremsscheibe 194 ist dabei so angeordnet, dass sie bei nicht betätigtem bewegbarem Bremskörper 196 berührungsfrei zwischen diesem und dem feststehenden Bremskörper 198 drehbar ist, während die Bremsscheibe 194 bei kraftbeaufschlagtem bewegbaren Bremskörper 196 sich deformiert und dadurch an den feststehenden Bremskörper 198 anlegbar und zwischen diesem und dem bewegbaren Bremskörper 196 einspannbar ist, um den Rotor 186 des Torque-Motors 182 und mitsamt dem Revolverkopf 74 um die Revolverdrehachse 76 drehfest festlegen zu können.

Die Bremseinheit 190 ist dabei so dimensioniert, dass sie in der Lage ist, sämtliche bei der Bearbeitung eines Werkstücks auf den Revolverkopf 74 wirkenden Drehmomente aufzunehmen.

Ferner wird die Bremseinheit 190 so betrieben, dass diese aktiviert wird, wenn die jeweilige Drehlage des Revolverkopfes 44 durch den Revolverkopfdrehantrieb 164 stabil gehalten wird, so dass nach Aktivieren der Bremseinheit 190 die Möglichkeit besteht, die Leistung des Revolverkopfdrehantriebs 164 zur Positionierung des Revolverkopfes 74 zu reduzieren.

Vor einem Lösen der Bremseinheit wird jedoch die Leistung des Revolverkopfdrehantriebs 174 wieder soweit erhöht, dass sie wieder in der Lage ist, nach Lösen der Bremseinheit 190 die auf den Revolverkopf 74 wirkenden Drehmomente aufzunehmen und damit den Revolverkopf 74 drehlagestabil zu halten.

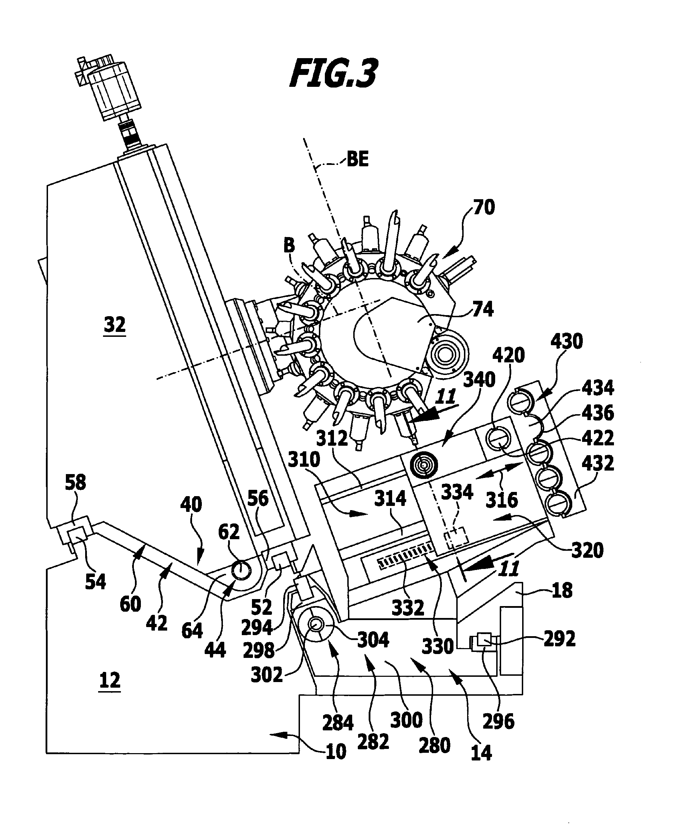

Wie in Fig. 3, 8 und 10 dargestellt, ist der Revolverkopf 74 mit einer Werkzeugspindeleinheit 200 versehen, welche ein Spindelgehäuse 202 aufweist, in welchem eine Werkzeugspindel 204 um eine Werkzeugspindelachse 206 drehbar gelagert ist, wobei die Werkzeugspindelachse 206 bei dem dargestellten Ausführungsbeispiel parallel zur Revolverkopfachse 76 ausgerichtet ist, jedoch im Abstand von dieser verläuft.

In die Werkzeugspindel 204 ist ein Schaft 208 eines rotierend antreibbaren Werkzeugs RW einsetzbar und durch die Werkzeugspindel 204 antreibbar.

Die Werkzeugspindel 204 könnte beispielsweise einen eigenen Werkzeugspindelmotor aufweisen.

Bei dem dargestellten Ausführungsbeispiel ist die Werkzeugspindel 204 durch einen als Ganzes mit 220 bezeichneten Werkzeugspindelantrieb antreibbar, welcher einen koaxial zur Revolverkopfachse 76 durch den Revolverkopfdrehantrieb 164 hindurchgeführten Antriebsstrang 222, beispielsweise in Form einer Antriebswelle aufweist, wobei der Antriebsstrang 222 einerseits über ein Kopplungsgetriebe 224 mit der Werkzeugspindel 204 gekoppelt ist und andererseits durch ein Kopplungsgetriebe 226 mit einem Werkzeugspindelantriebsmotor 228 gekoppelt ist, und wobei der Werkzeugspindelantriebsmotor 228 an dem Revolvergehäuse 72 angeordnet ist. Das Kopplungsgetriebe 226 und der Antriebsstrang 222 verlaufen in dem Revolvergehäuse 72 bis zum Revolverkopf 74, und im Revolverkopf 74 ist das Kopplungsgetriebe 224 angeordnet.

Dieses Kopplungsgetriebe 224 kann als ein einfaches, nur eine Übersetzung aufweisendes Kopplungsgetriebe ausgebildet sein.

Vorzugsweise ist das Kopplungsgetriebe 224 ein Schaltgetriebe, welches durch ein bewegbares Getriebezahnrad 232 in zwei verschiedene Übersetzungen umschaltbar ist.

Die Werkzeugspindeleinheit 200 ist so angeordnet, dass diese sich nicht über eine dem Revolvergehäuse 72 zugewandte Rückwand 234 des Revolverkopfes 74 hinauserstreckt, sondern über eine frontseitige Stirnwand 236 des Revolverkopfes 74 übersteht.

Ferner ist das Spindelgehäuse 202 der Werkstückspindeleinheit 200 in einen Trägerkörper 240 des Revolverkopfes 74, insbesondere einstückig, integriert, wobei der Trägerkörper 240 außer dem Spindelgehäuse 202 der Werkzeugspindeleinheit 200 noch mit einem Satz erster Werkzeugaufnahmen 242 versehen ist, die sich ausgehend von konisch zur Revolverkopfachse 76 verlaufenden Montageflächen 244 in den Trägerkörper 240 hineinerstrecken, wobei die Montageflächen 244 am Trägerkörper 240 auf einer dem Revolvergehäuse 72 abgewandten Frontseite angeordnet sind und beispielsweise der Revolverkopfachse 76 in einem Winkel von beispielsweise 115° verlaufen.

Die Werkzeugaufnahmen 242 sind dabei ihrerseits so angeordnet und ausgerichtet, dass eine Aufnahmeachse 246 derselben senkrecht zu den Montageflächen 244 verläuft und in diesem Fall zwischen sich und der Revolverkopfachse 76 einen Winkel von beispielsweise 25° einschließt.

Darüber hinaus ist der Trägerkörper 240 des Revolverkopfes 74 mit einem Satz von zweiten Werkzeugaufnahmen 252 versehen, welche sich ausgehend von Montageflächen 254 in den Trägerkörper 240 hineinerstrecken, wobei die Montageflächen 254 am Trägerkörper 240 auf einer dem Revolvergehäuse zugewandten Rückseite angeordnet sind und zu der Revolverkopfachse 76 in einem Winkel von beispielsweise 25° verlaufen, während die zweiten Werkzeugaufnahmen 252 Aufnahmeachsen 256 aufweisen, die einen Winkel von beispielsweise 115° mit der Revolverkopfachse 76 einschließen.

Bei dem in Fig. 10 dargestellten Revolverkopf 74 sind die Montageflächen 244 und 254 als konisch zur Revolverkopfachse 76 verlaufende und unter Bildung eines Außenrandes 250 des Revolverkopfes 74 aneinander angrenzende Außenflächen des Trägerkörpers 240 ausgebildet, die sich um die Revolverkopfachse 76 in einem Kreissegment 258 erstrecken, das sich über einen Winkelbereich von mindestens 270°, höchstens 320°, ausdehnt.

Somit ist der Revolverkopf 74 insbesondere als Kronenrevolverkopf ausgebildet.

Bei dem Revolverkopf 74 verbleibt am Trägerkörper 240 noch ein von den Werkzeugaufnahmen 242 und 252 und den Montageflächen 244 bzw. 254 freies Kreissegment 260, von mindestens 40°, höchstens 90°, in dem das Spindelgehäuse 202 an den Trägerkörper 240 angeordnet ist.

Zweckmäßigerweise sind bei dem Trägerkörper 240 die ersten Werkzeugaufnahmen 242 und die zweiten Werkzeugaufnahmen 252 in einer Umlaufrichtung 262 um die Revolverkopfachse 76 so angeordnet, dass die Aufnahmeachsen 246 und 256 jeweils in in der Umlaufrichtung 262 aufeinanderfolgenden Radialebenen 264 bzw. 266 liegen, die jedoch voneinander einen Winkelabstand WA aufweisen, wobei in jeder der Radialebenen 264 und 266 jeweils nur eine Werkzeugaufnahme 242 mit der Aufnahmeachse 246 bzw. 252 mit der Aufnahmeachse 256 angeordnet ist, so dass die ersten Werkzeugaufnahmen 242 und die zweiten Werkzeugaufnahmen 252 relativ zueinander in der Umlaufrichtung 262 versetzt angeordnet sind, um damit den Raum im Trägerkörper 240 optimal zu nutzen.

Vorzugsweise werden dabei in die ersten Werkzeugaufnahmen 242 überwiegend Innenbearbeitungswerkzeuge IW eingesetzt, während in den zweiten Werkzeugaufnahmen 252 vorwiegend Außenbearbeitungswerkzeuge AW eingesetzt werden können.

Damit besteht die Möglichkeit, in die Werkzeugaufnahmen 242 Innenbearbeitungswerkzeuge IW einzusetzen, während in die zweiten Werkzeugaufnahmen 252 vorwiegend Außenbearbeitungswerkzeuge AW eingesetzt werden, die in Richtung der Aufnahmeachsen 256 eine geringere Ausdehnung aufweisen als die Innenbearbeitungswerkzeuge IW in Richtung ihrer Aufnahmeachsen 246.

An dem Maschinengestell 12 ist außerdem der Werkstückspindeleinheit 20 gegenüberliegend ein Z-Trägersystem 280 vorgesehen, welches ein Z-Schlittensystem 282 sowie einen Z-Achsantrieb 284 zum Bewegen einer Funktionsträgerbasis 290 umfasst.

Das Z-Schlittensystem 282 weist am Maschinengestell 12 angeordnete Z-Führungen 292 und 294 auf, an denen Führungswagen 296 und 298 in Z-Richtung bewegbar geführt sind, wobei durch die Z-Führungswagen 296 und 298 ein als Ganzes mit 300 bezeichneter Z-Trägerschlitten an dem Vorbau 14 geführt ist.

Zum gesteuerten Verschieben des Z-Trägerschlittens 300 mittels der Maschinensteuerung 50 umfasst der Z-Achsantrieb 284 eine Antriebsspindel 302, welche mit einer Spindelmutter 304, die fest im Z-Trägerschlitten 300 angeordnet ist, zusammenwirkt und welche durch einen Antriebsmotor 306, ebenfalls angeordnet an dem Maschinengestell 10, antreibbar ist.

Der Z-Trägerschlitten 300 trägt, wie in Fig. 1 und 3 dargestellt, die Funktionsträgerbasis 290, welche eine Querführungsbasis 310 mit Querführungen 312 und 314 aufweist, wobei an diesen Querführungen 312 und 314 ein als Ganzes mit 320 bezeichneter Querschlitten der Funktionsträgerbasis 290 mittels mit den Querführungen 312 und 314 zusammenwirkenden Führungskörpern 322 und 324 geführt ist, so dass der Querschlitten 320 insgesamt über eine Führung relativ zur Querführungsbasis 310 in der Querrichtung 316 quer zur Z-Richtung bewegbar ist.

Der Querschlitten 320 ist durch einen als Ganzes mit 330 bezeichneten Querachsantrieb der Funktionsträgerbasis 290 in der Querrichtung 316 bewegbar, wobei der Querachsantrieb 330 eine Antriebsspindel 332 aufweist, welche mit einer Spindelmutter 334 zusammenwirkt, wobei die Spindelmutter 334 beispielsweise am Querschlitten 320 angeordnet ist und die Antriebsspindel 332, die sich in der Querrichtung 316 erstreckt, drehbar, jedoch in Richtung 316 unverschiebbar an der Querführungsbasis 310 angeordnet ist.

Die Antriebsspindel 332 ist dabei ferner noch durch einen als Ganzes mit 336 bezeichneten Antriebsmotor antreibbar, wobei der Antriebsmotor 336 durch die Maschinensteuerung 50 ansteuerbar, die es erlaubt, den Querschlitten 320 längs der Querrichtung 316 als positionsgesteuerte insbesondere lagegeregelt Achse ähnlich einer NC-Achse zu bewegen.

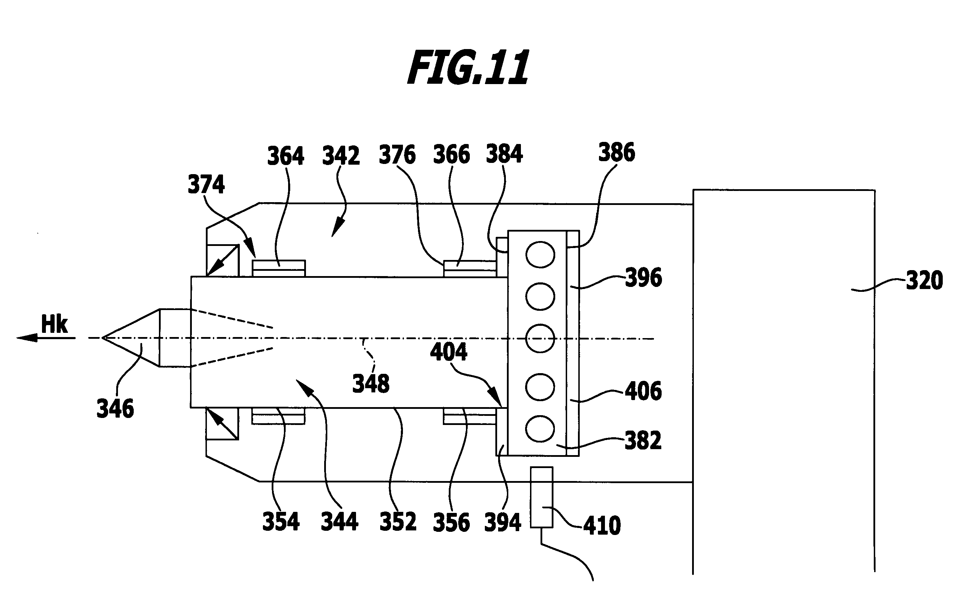

An dem Querschlitten 320 ist ein als Ganzes mit 340 bezeichneter Reitstock angeordnet, welcher, wie in Fig. 11 dargestellt, ein Reitstockgehäuse 342 umfasst, in welchem ein mit 344 bezeichneter Reitstockspitzenträger gelagert ist, der seinerseits eine Reitstockspitze 346 trägt.

Der Reitstockspitzenträger 344 ist dabei in dem Reitstockgehäuse 342 um eine Reitstockspitzenachse 348 drehbar und längs der Reitstockspitzenachse 348 begrenzt verschiebbar gelagert.

Hierzu umfasst der Reitstockspitzenträger 344 einen ersten Lagerabschnitt 352, welcher mit zur Reitstockspitzenachse 348 zylindrischen Radiallagerflächen 354 und 356 versehen ist, die in dem Reitstockgehäuse 342 vorgesehenen Ringtaschen 364 und 366 gegenüberliegen, wobei den Ringtaschen 364 und 366 ein hydraulisches Fluid unter Druck zuführbar ist, so dass die Radiallagerflächen 354 und 356 mit den entsprechend gegenüberliegenden Ringtaschen 364 bzw. 366 hydrostatische Radiallager 374 und 376 bilden, die einerseits eine radial steife Lagerung des Reitstockspitzenträgers 344 im Reitstockgehäuse 342 zulassen, andererseits jedoch aber auch eine Verschiebung des Reitstockspitzenträgers 344 in Richtung der Reitstockspitzenachse 348 zulassen.

Die axiale Abstützung des Reitstockspitzenträgers 344 erfolgt daher durch einen zweiten Lagerabschnitt 382 des Reitstockspitzenträgers 344, welcher quer zur Reitstockspitzenachse 348 verlaufende und einander gegenüberliegende Axiallagerflächen 384 und 386 aufweist, denen gegenüberliegend Druckräume 394 und 396 in dem Reitstockgehäuse 342 angeordnet sind, wobei die Druckräume 394 und 396 und der zweite Lagerabschnitt 382 so angeordnet sind, dass sich der zweite Lagerabschnitt 384 in Richtung der Reitstockspitzenachse 348 relativ zu den Druckräumen 394 und 396 bewegen kann, um durch Beaufschlagung der Druckräume 394 und 396 mit unter Druck stehendem Hydraulikmedium den zweiten Lagerabschnitt 382 in Richtung der Reitstockspitzenachse 348 verschieben zu können, und zwar um Distanzen von beispielsweise weniger als 10 mm, vorzugsweise weniger als 5 mm.

Somit bilden die Axiallagerflächen 382 und 386 mit den entsprechenden Druckräumen 394 und 396 hydrostatische Positioniereinheiten 404 und 406, mit welchen eine Verschiebung des Reitstockspitzenträgers 344 in Richtung der Reitstockspitzenachse 348 erfolgen kann.

Zusätzlich ist in dem Reitstockgehäuse 342 noch ein Sensor 410 vorgesehen, welcher einerseits in der Lage ist, zu detektieren, ob und wie schnell sich der Reitstockspitzenträger 344 relativ zum Reitstockgehäuse 342 um die Reitstockspitzenachse 348 dreht, um welche Winkel sich der Reitstockspitzenträger 344 dreht und ob und in welchem Maße eine Verschiebung des Reitstockspitzenträgers 344 in Richtung der Reitstockspitzenachse 348 relativ zum Reitstockgehäuse 342 erfolgt.

Durch die über den Reitstockspitzenträger 344 im Reitstockgehäuse 342 hydrostatisch radial sowie axial gelagerte Reitstockspitze 346 besteht die Möglichkeit, einerseits die mit dem Werkstück mitrotierende Reitstockspitze 346 möglichst reibungsfrei zu führen und andererseits aber auch in Richtung der Reitstockspitzenachse 348 zu verschieben, um und insbesondere über die hydrostatischen Positioniereinheiten 404 und 406 die Reitstockspitze 346 mit einer Haltekraft Hk gegen das in der Werkstückspindeleinheit 20 aufgenommene Werkstück zu drücken, wobei die Haltekraft Hk, mit welcher die Reitstockspitze 346 auf das Werkstück einwirkt, durch die Drücke in den hydrostatischen Positioniereinheiten 404 und 406 dosiert werden können.

Außerdem ist durch die Anordnung des Reitstocks 340 auf dem Querschlitten 320 und die lagegeregelte Bewegbarkeit des Querschlittens 320 in der Querrichtung 316 mittels der Maschinensteuerung 50 die Möglichkeit gegebenen, den Reitstock 340 in der Arbeitsstellung exakt in einer Bearbeitungsebene BE zu positionieren, so dass die Reitstockspitzenachse 348 in der Bearbeitungsebene BE liegt, in der auch die Werkstückspindelachse 26 verläuft, wobei die Reitstockspitzenachse 348 und die Werkstückspindelachse 26 hierzu koaxial zueinander angeordnet sind.

An dem Querschlitten 320 ist, und zwar in der Querrichtung 316 im Abstand von der Reitstockspitze 340, insbesondere in einem Abstand der größer ist als ein maximaler Radius der Werkstückaufnahme 28, eine Werkzeugaufnahme 420 angeordnet, und zwar an einer einem Werkzeugmagazin 430 zugewandten Seite des Querschlittens 320.

Die Werkzeugaufnahme 420 ist insbesondere größer dimensioniert als alle Werkzeugaufnahmen am Revolverkopf 74, insbesondere hat die Werkzeugaufnahme 420 einen größeren Durchmesser als alle Werkzeugaufnahmen am Revolverkopf 74. Insbesondere beträgt der Durchmesser der Werkzeugaufnahme 420 mindestens das 1,2-fache eines maximalen Durchmessers einer der Werkzeugaufnahmen am Revolverkopf 74.

Somit besteht die Möglichkeit, in die Werkzeugaufnahme 420 aus dem Werkzeugmagazin 430 ein Werkzeug 422 einzusetzen und dieses durch lagegeregeltes Bewegen des Querschlittens 320 mittels der Maschinensteuerung 50 in einer geeigneten Position zur Bearbeitung am Werkstück einzusetzen, vorzugsweise das Werkzeug 422 in der Arbeitsstellung in einen Bereich nahe der Bearbeitungsebene BE zu positionieren, um insbesondere mit dem als Innenbearbeitungswerkzeug IW ausgebildeten Werkzeug 422 Innenbearbeitungen am Werkstück vorzunehmen.

Das Werkzeug 422 ist vorzugsweise ein Werkzeug, das aufgrund eines Durchmessers seines in die Werkzeugaufnahmen 420 einzusetzenden Halteansatzes, seines Gewichts und seiner Abmessungen, insbesondere seiner Länge, nur mit Schwierigkeiten oder gar nicht in dem Revolverkopf 74 eingesetzt werden kann, und bei einem Einsatz im Revolverkopf 74 wegen seiner Abmessungen den Betrieb der Werkzeugmaschine einschränken würde, so dass die Anordnung eines derartigen Werkzeugs oder derartiger Werkzeugaufnahmen 420 die Funktionalität des Revolverkopfes 74 mit den in diesen angeordneten Werkzeugen signifikant verbessert.

Da die Werkzeugaufnahme 420 durch den Querschlitten 320 in der Querrichtung 316 bewegbar ist und die Führungsbasis 310 in der Z-Richtung bewegbar ist, können die beiden Bewegungen in der Querrichtung 316 und in der Z-Richtung dazu ausgenützt werden, um das Werkzeug 422 sowohl in der Querrichtung 316 als auch in der Z-Richtung sowohl zur Bearbeitung des Werkstücks als auch zum Werkzeugwechsel zu bewegen.

Das Werkzeugmagazin 430 weist ein Mehrfachspeicherelement 432 für die Werkzeuge 422 auf, das seinerseits so relativ zu einer Übergabeposition 434, in welche die Werkzeugaufnahme 420 bewegbar ist, bewegbar ist, dass unterschiedliche Werkzeughalterungen 436 des Mehrfachspeicherelements 432 in die Übergabeposition 434 bringbar sind, um in der Übergabeposition 434 entweder ein Werkstück 422 in die jeweilige Speicheraufnahme 436 des Mehrfachspeicherelements 432 einzusetzen oder ein derartiges Werkzeug aus der Werkzeughalterung 436 des Mehrfachspeicherelements 432 zu entnehmen.

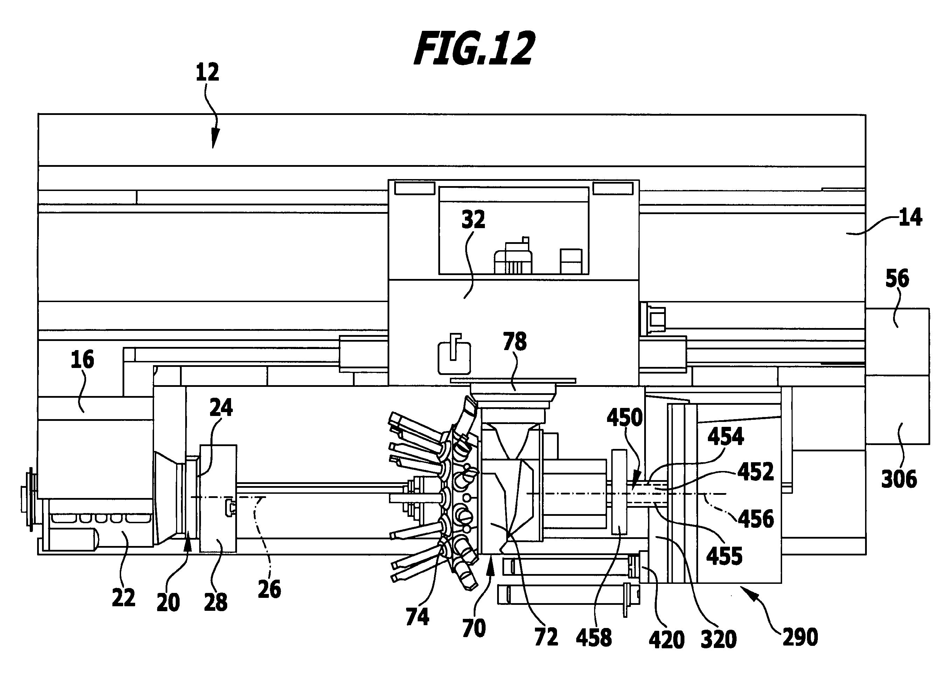

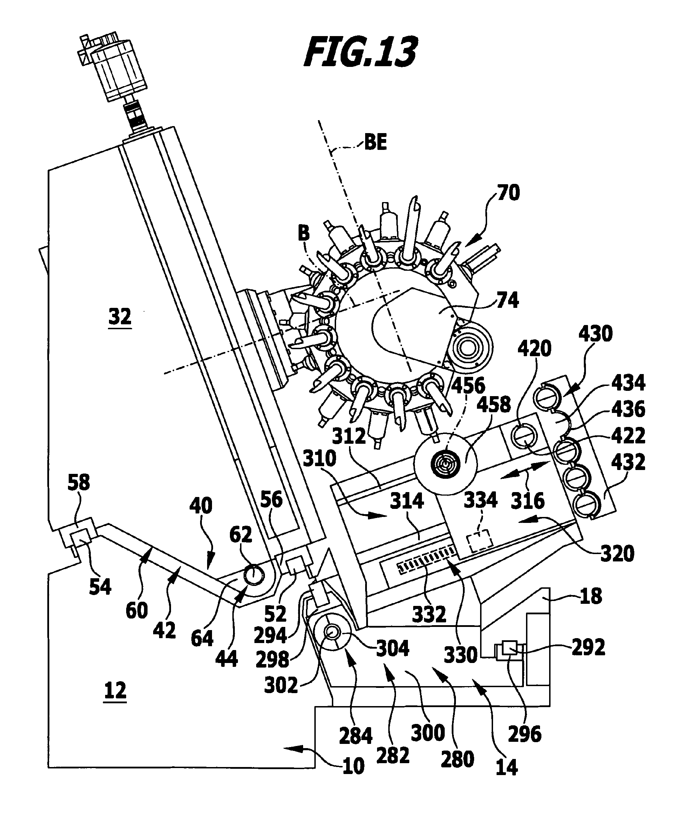

Bei einem zweiten Ausführungsbeispiel einer erfindungsgemäßen Werkzeugmaschine, dargestellt in Fig. 12 und 13, sind diejenigen Teile, die mit denen des ersten Ausführungsbeispiels identisch sind, mit denselben Bezugszeichen versehen, so dass vollinhaltlich auf die Ausführungen zum ersten Ausführungsbeispiel Bezug genommen wird.

Bei dem zweiten Ausführungsbeispiel ist anstelle des Reitstocks 340 eine Gegenspindeleinheit 450 an der Funktionsträgerbasis 290 vorgesehen, welche ein Gegenspindelgehäuse 452 aufweist, in welchem eine Gegenspindel 454 um eine Gegenspindelachse 456 drehbar gelagert ist.

Die Gegenspindel 454 trägt eine Werkstückaufnahme 458, in welcher ein Werkstück aufnehmbar ist, das beispielsweise bereits in der Werkstückaufnahme 28 auf einer Vorderseite bearbeitet wurde, so dass das Werkstück danach in die Werkstückaufnahme 458 übergeben und rückseitig bearbeitet werden kann.

Ein Antrieb der Gegenspindel 454 erfolgt in bekannter Weise über einen durch mit Maschinensteuerung 50 rotierend und als C-Achse ansteuerbaren Gegenspindelantrieb 455.

Durch die lagegeregelte Bewegbarkeit der Funktionsträgerbasis 290 in der Querrichtung 316 besteht somit die Möglichkeit, die Gegenspindel 454 mit ihrer Gegenspindelachse 456 koaxial zu der Werkstückspindel 24 anzuordnen um ein Werkstück von dieser übernehmen zu können.

## Patentansprüche

1. Werkzeugmaschine umfassend,
ein Maschinengestell (10),
eine an dem Maschinengestell (10) angeordnete Werkstückspindeleinheit (20) mit einer Werkstückspindel (24) und mit einer Werkstückaufnahme (28), welche durch einen Werkstückspindelantrieb (25) um eine Werkstückspindelachse (26) rotierend antreibbar und um die Werkstückspindelachse (26) als C-Achse gesteuert drehbar ist,
eine am Maschinengestell (10) angeordnete Werkzeugträgereinheit (30) mit einem Werkzeugrevolver (70), der einen relativ zu einem Revolvergehäuse (72) um eine Revolverkopfachse (76) drehbaren Revolverkopf (74) umfasst, und mit einer das Revolvergehäuse (72) tragenden und am Maschinengestell abstützenden Werkzeugträgerbasis (32), mindestens ein Bewegungssystem (40,120), mit welchem die Werkstückaufnahme (28) und ein in einer Arbeitsstellung stehendes Werkzeug (W) relativ zueinander gesteuert bewegbar sind,
und eine Maschinensteuerung (50) zur Steuerung der Bewegungen des in der Arbeitsstellung stehenden Werkzeugs (W) relativ zu einem in der Werkstückaufnahme (28) aufgenommenen Werkstück,
**dadurch gekennzeichnet, dass** in Z-Richtung auf einer der Werkstückspindel (24) gegenüberliegenden Seite der Werkstückaufnahme (28) eine Werkstückabstützeinheit (340) vorgesehen ist, dass die Werkstückabstützeinheit (340, 450) auf einer durch die Maschinensteuerung (50) gesteuert bewegbaren Funktionsträgerbasis (290) angeordnet ist und **dass** die Funktionsträgerbasis (290) eine Werkzeugaufnahme (420) für ein Werkzeug (IW') aufweist, welches durch die Funktionsträgerbasis (290) mit der Werkstückabstützeinheit (340, 450) derart in einer Querrichtung (316) quer zur Z-Richtung bewegbar ist, dass entweder die Werkstückabstützeinheit (340, 450) oder die Werkzeugaufnahme (420) in eine Arbeitsstellung bringbar sind, **dass** die Funktionsträgerbasis (290) in der Querrichtung (316) mittels der Maschinensteuerung (50) lagegeregelt positionierbar ist, und **dass** somit die Maschinensteuerung (50) die Funktionsträgerbasis (290) in der Querrichtung (316) entsprechend einer konventionellen X-Achse steuert.

2. Werkzeugmaschine nach Anspruch 1, **dadurch gekennzeichnet, dass** die Werkzeugaufnahme (420) in der Funktionsträgerbasis (290) eine Dimensionierung aufweist, welche größer ist, als die Dimensionierung einer Werkzeugaufnahme (242, 252) im Revolverkopf (74).

3. Werkzeugmaschine nach einem der voranstehenden Ansprüche, dadurch **gekennzeichnet, dass** das in der Werkzeugaufnahme (420) der Funktionsträgerbasis (290) angeordnete Werkzeug ein Innenbearbeitungswerkzeug (IW) ist.

4. Werkzeugmaschine nach einem der voranstehenden Ansprüche, dadurch **gekennzeichnet, dass** das in der Werkzeugaufnahme (420) in der Funktionsträgerbasis (290) angeordnete Werkzeug sich parallel zur Z-Achse (Z) erstreckt.

5. Werkzeugmaschine nach einem der voranstehenden Ansprüche, **dadurch gekennzeichnet, dass** in die Werkzeugaufnahme (420) Werkzeuge (IW') aus einem Werkzeugmagazin (430) einwechselbar sind.

6. Werkzeugmaschine nach Anspruch 4, **dadurch gekennzeichnet, dass** die Werkzeugaufnahme (420) in eine Übergabeposition bringbar ist, in welcher Werkzeuge (IW') zwischen der Werkzeugaufnahme (420) und dem Werkzeugmagazin (430) austauschbar sind.

7. Werkzeugmaschine nach Anspruch 5 oder 6, **dadurch gekennzeichnet**, **dass** das Werkzeugmagazin (430) ein relativ zur Übergabeposition bewegbares Mehrfachspeicherelement (432) aufweist, mit welchem entweder leere Speicheraufnahmen (436) oder mit Werkzeugen (IW') bestückte Speicheraufnahmen (436) in die Übergabeposition bringbar sind.

8. Werkzeugmaschine nach einem der voranstehenden Ansprüche, dadurch **gekennzeichnet, dass** die Werkstückabstützeinheit (340, 450) um eine zur Werkstückspindelachse (26) koaxiale Achse drehbar relativ zur Funktionsträgerbasis (290) positionierbar ist.

9. Werkzeugmaschine nach einem der voranstehenden Ansprüche, dadurch **gekennzeichnet, dass** die Werkstückabstützeinheit als Gegenspindeleinheit (450) ausgebildet ist.

10. Werkzeugmaschine nach Anspruch 9, **dadurch gekennzeichnet, dass** die Gegenspindeleinheit (450) durch einen Gegenspindelantrieb (455) rotierend antreibbar ist.

11. Werkzeugmaschine nach einem der Ansprüche 1 bis 10, dadurch **gekennzeichnet, dass** die Werkstückabstützeinheit als Reitstock (340) ausgebildet ist.

12. Werkzeugmaschine nach Anspruch 11, **dadurch gekennzeichnet, dass** der Reitstock (340) eine in Richtung der Z-Achse (Z) bewegbar relativ zur Funktionsträgerbasis (290) angeordnete Reitstockspitze (346) aufweist, die in Richtung der Werkstückaufnahme (28) kraftbeaufschlagbar ist.

13. Werkzeugmaschine nach Anspruch 12, **dadurch gekennzeichnet, dass** die Reitstockspitze (346) durch eine Haltekraft (Hk) beaufschlagbar ist.

14. Werkzeugmaschine nach einem der voranstehenden Ansprüche, dadurch **gekennzeichnet, dass** am Revolverkopf (74) eine Werkzeugspindeleinheit (200) angeordnet ist, die ein am Revolverkopf (74) sitzendes Werkzeugspindelgehäuse (202), eine Werkzeugspindel (204) und einen Werkzeugspindelantrieb (220) aufweist.

## Claims

1. Machine tool comprising
a machine frame (10),
a workpiece spindle unit (20) arranged on the machine frame (10) and having a workpiece spindle (24) and a workpiece receptacle (28) rotatingly drivable about a workpiece spindle axis (26) by a workpiece spindle drive (25), said workpiece receptacle being rotatable about the workpiece spindle axis (26) as a C axis in a controlled manner,
a tool carrier unit (30) arranged on the machine frame (10) and having a tool turret (70) comprising a turret head (74) rotatable about a turret head axis (76) relative to a turret housing (72) and a tool carrier base (32) bearing the turret housing (72) and being supported on the machine frame,
at least one movement system (40, 120) for movement of the workpiece receptacle (28) and a tool (W) located in an operative positon relative to one another in a controlled manner,
and a machine control (50) for controlling the movements of the tool (W) located in the operative position relative to a workpiece accommodated in the workpiece receptacle (28),
**characterized in that** a workpiece support unit (340) is provided on a side of the workpiece receptacle (28) located opposite the workpiece spindle (24) in a Z direction, that the workpiece support unit (340, 450) is arranged on a functional carrier base (290) movable in a controlled manner by the machine control (50) and **that** the functional carrier base (290) has a tool receptacle (420) for a tool (IW') movable by the functional carrier base (290) with the workpiece support unit (340, 450) in a transverse direction (316) transverse to the Z direction in such a manner that either the workpiece support unit (340, 450) or the tool receptacle (420) are adapted to be brought into an operating position, that the functional carrier base (290) is positionable in the transverse direction (316) by the machine control (50) in a position-controlled manner, and **that**, as a result, the machine control (50) controls the functional carrier base (290) in the transverse direction (316) in accordance with a conventional X axis.

2. Machine tool as defined in claim 1, **characterized in that** the tool receptacle (420) in the functional carrier base (290) has dimensions larger than the dimensions of a tool receptacle (242, 252) in the turret head (74).

3. Machine tool as defined in any one of the preceding claims, **characterized in that** the tool arranged in the tool receptacle (420) of the functional carrier base (290) is an internal machining tool (IW).

4. Machine tool as defined in any one of the preceding claims, **characterized in that** the tool arranged in the tool receptacle (420) in the functional carrier base (290) extends parallel to the Z axis (Z).

5. Machine tool as defined in any one of the preceding claims, **characterized in that** tools (IW') from a tool storage unit (430) are insertable into the tool receptacle (420).

6. Machine tool as defined in claim 4, **characterized in that** the tool receptacle (420) is adapted to be brought into a transfer position, tools (IW') being interchangeable between the tool receptacle (420) and the tool storage unit (430) in said position.

7. Machine tool as defined in claim 5 or 6, **characterized in that** the tool storage unit (430) has a multiple storage element (432) movable relative to the transfer positon, either empty storage receptacles (436) or storage receptacles (436) equipped with tools (IW') being adapted to be brought into the transfer position with said multiple storage element.

8. Machine tool as defined in any one of the preceding claims, **characterized in that** the workpiece support unit (340, 450) is positionable relative to the functional carrier base (290) as a result of rotation about an axis coaxial to the workpiece spindle axis (26).

9. Machine tool as defined in any one of the preceding claims, **characterized in that** the workpiece support unit is designed as a counterspindle unit (450).

10. Machine tool as defined in claim 9, **characterized in that** the counterspindle unit (450) is rotatingly drivable by a counterspindle drive (455).

11. Machine tool as defined in any one of claims 1 to 10, **characterized in that** the workpiece support unit is designed as a tailstock (340).

12. Machine tool as defined in claim 11, **characterized in that** the tailstock (340) has a tailstock centre (346) arranged so as to be movable in the direction of the Z axis (Z) relative to the functional carrier base (290), said tailstock centre being acted upon by a force in the direction of the workpiece receptacle (28).

13. Machine tool as defined in claim 12, **characterized in that** the tailstock centre (346) is acted upon by a holding force (Hk).

14. Machine tool as defined in any one of the preceding claims, **characterized in that** a tool spindle unit (200) is arranged on the turret head (74) and has a tool spindle housing (202) seated on the turret head (74), a tool spindle (204) and a tool spindle drive (220).

## Revendications

1. Machine-outil comprenant,
un bâti de machine (10),
une unité de broche pour pièces à usiner (20) disposée au niveau du bâti de machine (10), pourvue d'une broche pour pièces à usiner (24) et d'un logement pour pièces à usiner (28), qui peut être entraîné en rotation par un entraînement de broche pour pièces à usiner (25) autour d'un axe de broche pour pièces à usiner (26) et qui peut tourner de manière commandée en tant qu'axe C autour de l'axe de broche pour pièces à usiner (26),
une unité porte-outil (30) disposée au niveau du bâti de machine (10), pourvue d'une tourelle pour outils (70), qui comprend une tête de tourelle (74) pouvant tourner autour d'un axe de tête de tourelle (76) par rapport à un boîtier de tourelle (72), et également pourvue d'une base de porte-outil (32) supportant le boîtier de tourelle (72) et s'appuyant au niveau du bâti de machine,
au moins un système de déplacement (40, 120), avec lequel le logement pour pièces à usiner (28) et un outil (W) se trouvant dans une position de travail peuvent être déplacés de manière commandée l'un par rapport l'autre,
et une commande de machine (50) servant à commander les déplacements de l'outil (W) se trouvant dans la position de travail par rapport à une pièce à usiner logée dans le logement pour pièces à usiner (28),
**caractérisée en ce qu'**une unité d'appui pour pièces à usiner (340) est prévue dans la direction Z sur un côté, opposé à la broche pour pièces à usiner (24), du logement pour pièces à usiner (28),
en ce que l'unité d'appui pour pièces à usiner (340, 450) est disposée sur une base de support fonctionnelle (290) pouvant être déplacée de manière commandée par la commande de machine (50), et **en ce que** la base de support fonctionnelle (290) présente un logement pour outils (420) pour un outil (IW'), qui peut être déplacé par la base de support fonctionnelle (290) avec l'unité d'appui pour pièces à usiner (340, 450) de telle manière dans une direction transversale (316) de manière transversale par rapport à la direction Z que soit l'unité d'appui pour pièces à usiner (340, 450) soit le logement pour pièces à usiner (420) peuvent être amenés dans une position de travail, que la base de support fonctionnelle (290) peut être positionnée de manière ajustée en position dans la direction transversale (316) au moyen de la commande de machine (50), et **qu'**ainsi la commande de machine (50) commande la base de support fonctionnelle (290) dans la direction transversale (316) selon un axe X conventionnel.

2. Machine-outil selon la revendication 1, **caractérisée en ce que** le logement pour outils (420) présente dans la base de support fonctionnelle (290) une dimension qui est plus grande que la dimension d'un logement pour outils (242, 252) dans la tête de tourelle (74).

3. Machine-outil selon l'une quelconque des revendications précédentes, **caractérisée en ce que** l'outil disposé dans le logement pour outils (420) de la base de support fonctionnelle (290) est un outil d'usinage interne (IW).

4. Machine-outil selon l'une quelconque des revendications précédentes, **caractérisée en ce que** l'outil disposé dans le logement pour outils (420) dans la base de support fonctionnelle (290) s'étend de manière parallèle par rapport à l'axe Z (Z).

5. Machine-outil selon l'une quelconque des revendications précédentes, **caractérisée en ce que** des outils (IW') provenant d'un magasin d'outils (430) peuvent être changés dans le logement pour outils (420).

6. Machine-outil selon la revendication 4, **caractérisée en ce que** le logement pour outils (420) peut être amené dans une position de transfert, dans laquelle des outils (IW') peuvent être échangés entre le logement pour outils (420) et le magasin d'outils (430).

7. Machine-outil selon la revendication 5 ou 6, **caractérisée en ce que** le magasin d'outils (430) présente un élément à plusieurs stockages (432) pouvant être déplacé par rapport à la position de transfert, avec lequel soit des logements à stockage (436) vides soit des logements à stockage (436) occupés par des outils (IW') peuvent être amenés dans la position de transfert.

8. Machine-outil selon l'une quelconque des revendications précédentes, **caractérisée en ce que** l'unité d'appui pour pièces à usiner (340, 450) peut être positionnée par rapport à la base de support fonctionnelle (290) de manière à pouvoir tourner autour d'un axe coaxial par rapport à l'axe de broche pour pièces à usiner (26).

9. Machine-outil selon l'une quelconque des revendications précédentes, **caractérisée en ce que** l'unité d'appui pour pièces à usiner est réalisée sous la forme d'une unité à contre-broches (450).

10. Machine-outil selon la revendication 9, **caractérisée en ce que** l'unité à contre-broches (450) peut être entraînée en rotation par un entraînement de contre-broche (455).

11. Machine-outil selon l'une quelconque des revendications 1 à 10, **caractérisée en ce que** l'unité d'appui pour pièces à usiner est réalisée sous la forme d'une poupée (340).

12. Machine-outil selon la revendication 11, **caractérisée en ce que** la poupée (340) présente une pointe de poupée (346) disposée par rapport à la base de support fonctionnelle (290) de manière à pouvoir être déplacée dans la direction de l'axe Z (Z), laquelle pointe de poupée peut être soumise à l'action d'une force en direction du logement pour pièces à usiner (28).

13. Machine-outil selon la revendication 12, **caractérisée en ce que** la pointe de poupée (346) peut être soumise à l'action d'une force de maintien (Hk).

14. Machine-outil selon l'une quelconque des revendications précédentes, **caractérisée en ce qu'**est disposée au niveau de la tête de tourelle (74) une unité à broches pour outils (200), laquelle présente un boîtier de broche pour outils (202) reposant au niveau de la tête de tourelle (74), une broche pour outils (204) et un entraînement de broche pour outils (220).
